# FASCICULE DE BREVET EUROPEEN

(11) **EP 4 432 096 B1**
(45) Date de publication et mention de la délivrance du brevet: **21.01.2026**
(21) Numéro de dépôt: 24163097.9
(22) Date de dépôt: 13.03.2024
(51) Int. Cl.: G06F 11/3668

(54) **PROCÉDÉ DE GÉNÉRATION AUTOMATIQUE D'UNE SÉQUENCE DE NMAX INSTRUCTIONS EN LANGAGE ASSEMBLEUR, EXÉCUTABLE SANS ERREUR PAR UN PROCESSEUR MULTI-COEURS**
VERFAHREN ZUR AUTOMATISCHEN ERZEUGUNG EINER SEQUENZ VON NMAX BEFEHLEN IN EINER ZUSAMMENGESETZTEN SPRACHE, DIE VON EINEM MEHRKERNPROZESSOR FEHLERLOS AUSFÜHRBAREN, AUSGEFÜHRT WERDEN
METHOD FOR AUTOMATICALLY GENERATING A SEQUENCE OF NMAX ASSEMBLER LANGUAGE INSTRUCTIONS, EXECUTABLE ERRORLESS BY A MULTI-CORE PROCESSOR

(30) Priorité: 17.03.2023 FR 2302516
(43) Date de publication de la demande: 18.09.2024
(73) Titulaire: THALES, 92190 Meudon (FR)
(72) Inventeur: CHENEVIER, Florent, 31036 Toulouse (FR); DE GRANCEY, Florence, 31036 Toulouse (FR); SALORT, Joshua, 31100 Toulouse (FR)
(74) Mandataire: Atout PI Laplace

(56) Documents cités:
- US-A1- 2016 239 212
- COURTAUD CEDRIC ET AL: "Improving Prediction Accuracy of Memory Interferences for Multicore Platforms", 2019 IEEE REAL-TIME SYSTEMS SYMPOSIUM (RTSS), IEEE, 3 December 2019 (2019-12-03), pages 246 - 259, XP033752982, DOI: 10.1109/RTSS46320.2019.00031
- IORGA DAN ET AL: "Slow and Steady: Measuring and Tuning Multicore Interference", 2020 IEEE REAL-TIME AND EMBEDDED TECHNOLOGY AND APPLICATIONS SYMPOSIUM (RTAS), IEEE, 21 April 2020 (2020-04-21), pages 200 - 212, XP033778072, DOI: 10.1109/RTAS48715.2020.000-6

## Description

L'invention porte sur un procédé de génération automatique d'une séquence de Nmax instructions en langage assembleur, exécutable sans erreur par un processeur multi-cœurs.

Le domaine technique de l'invention est celui du logiciel en général et plus particulièrement de la génération de bouchons logiciels ou "stub" en langue anglaise. Un bouchon est un module logiciel simulant à minima la présence d'un autre. Dans le cas d'une imitation plus sophistiquée, notamment simulant une part des échanges fonctionnels, on parle de simulateurs ou modèles. Dans la présente invention, on se limite à simuler l'impact de l'exécution du logiciel sur l'activité d'un bus mémoire, on ne cherche pas à simuler l'aspect fonctionnel de l'application.

L'invention concerne également le test de performance de logiciels embarqués (Pire cas de temps d'exécution ou WCET pour acronyme de "Worst Case Execution Time" en langue anglaise, et l'analyse du problème des contentions ou interférences mémoire processeurs ou multi-cœurs et du comportement des logiciels en regard de celui-ci : notamment les notions d'agressivité et sensibilité.

La présente invention est un moyen pour générer automatiquement, et rapidement, des bouchons logiciels aux caractéristiques ciblées et au comportement maitrisé vis-à-vis des contentions mémoire.

Actuellement, pour construire un bouchon logiciel, une séquence de code est élaborée par un programmeur, en assembleur ou en langage de haut niveau, et il est exécuté en boucle.

Il est connu de générer, par un ingénieur logiciel une séquence de code en langage machine assembleur ou en langage de haut niveau tel que du langage C, qui est exécuté en boucle. Les caractéristiques de cette séquence sont déterminées par analyse d'un ingénieur logiciel, en fonction de son expertise du code assembleur et de l'impact de chaque instruction sur les contentions mémoire.

Une telle construction "manuelle" d'une séquence de code assembleur se heurte aux limitations intrinsèques d'une activité manuelle de ce type comme un temps long pour des séquences de taille importante, de l'ordre de plusieurs dizaines de minutes, voire plusieurs heures pour construire une séquence de plusieurs milliers d'instructions assembleur, ou comme les compétences fines nécessaires pour sécuriser l'exécution sur cible de chaque séquence nécessitant le respect des contraintes liées à chaque instruction (valeur des opérandes, adressage mémoire, gestion des registres).

Dès lors, la taille des séquences construites manuellement est souvent limitées à quelques instructions (au plus quelques dizaines). Or la taille des séquences générées est importante pour obtenir une grande diversité de Profils d'Accès Mémoire (des séquences de quelques dizaines d'instructions finiront par avoir des profils similaires).

Il est également connu de construire une séquence de code de manière automatique, par exemple en choisissant des instructions au hasard dans le dictionnaire d'instructions du microprocesseur.

La construction automatique de séquences de plusieurs centaines d'instructions par tirage au sort dans le dictionnaire d'instructions du microprocesseur, revient à faire de multiples tirages aléatoires successifs, et voit donc la loi des grands nombres s'appliquer.

Aussi, on obtient des séquences d'instructions statistiquement très similaires, qui reflètent la répartition statistique dans le dictionnaire des instructions de type lecture R, écriture W et locales (i.e. : ne travaillant que sur les registres), ainsi qu'une entropie E de Shannon moyenne.

En conséquence, il est actuellement très difficile de construire rapidement des séquences d'instructions aux caractéristiques variées et précisément choisies, que ce soit dans l'optique d'en faire une base d'apprentissage de plusieurs milliers d'items ou de construire un unique bouchon logiciel aux caractéristiques choisies.

Souvent, le comportement de telles séquences vis-à-vis des contentions mémoires est difficile à anticiper : il est difficile de quantifier ses capacités à générer et/ou subir les contentions mémoire, nommées respectivement son agressivité et sa sensibilité.

Dans l'utilisation des microprocesseurs multi-cœurs, plusieurs ressources peuvent être partagées par les différents logiciels s'exécutant en parallèles sur les différents cœurs. Notamment, la mémoire ou RAM pour acronyme de "Random Access Memory" en langue anglaise, est accessible par un bus commun à tous les cœurs.

Comme toute ressource partagée, ce bus est géré par un contrôleur qui gère les accès simultanés et concurrent selon ses propres logiques d'arbitrages, provoquant le ralentissement de l'un ou l'autre des logiciels s'exécutant sur les différents cœurs.

Selon l'activité de ces logiciels et surtout leur manière d'accéder à la mémoire (on parle de Profil d'Accès Mémoire ou de "Memory Acces Pattern" en langue anglaise), il se produit donc un ralentissement de leur exécution (lié à l'attente lors de l'exécution des instructions assembleur accédant à la mémoire en cas d'accès concurrents). Ce ralentissement dépend :
- des logiques d'arbitrage du contrôleur du bus mémoire,
- du profil d'accès mémoire du logiciel, et
- des profils des logiciels s'exécutant en parallèle sur les autres cœurs.

Ce phénomène est connu sous le terme d'interférences ou contentions mémoire.

Dans le cadre des logiciels embarqués critiques, il est nécessaire (et parfois requis par des autorités de certification) de fournir la valeur de pire cas du temps d'exécution du logiciel ou WCET, afin de vérifier qu'il a bien le temps de s'exécuter dans le temps qui lui a été alloué.

Cette caractérisation, déjà difficile pour des logiciels complexes sur des microprocesseurs mono-cœur, devient encore plus problématique sur des microprocesseurs multi-cœurs, du fait de ce phénomène de contentions impliquant tous les logiciels s'exécutant en parallèle.

Il est connu les document US 2016/0239212 A1, qui décrit des systèmes et méthodes pour modéliser le comportement d'accès à la mémoire et le comportement temporel du trafic mémoire. Il est inclus la réception de données indiquant le comportement d'accès à la mémoire résultant des instructions exécutées sur un processeur, la détermination d'un profil statistique de ce comportement, incluant des statistiques de tuples, et la génération d'un clone des instructions exécutées basé sur ce profil statistique pour simuler le comportement d'accès à la mémoire.

Il est également connu le document "Slow and Steady: Measuring and Tuning multicore Interference" 2020IEEE Real-Time and embedded technology and applications symposium (RTAS), IEEE, du 21 avril 2020, pages 200-212, DOI 101109/RT1S48715.2020.000-6, qui explore la conception et l'évaluation de techniques permettant de tester empiriquement les interférences à l'aide de programmes ennemis, en mettant l'accent sur la fiabilité (reproductibilité des résultats d'interférence) et la portabilité (efficacité des tests d'interférence sur différents processeurs).

On définit les notions d'agressivité, ou capacité à générer des contentions mémoires, et de sensibilité ou propension à les subir, par mesure face à des applications de référence que l'on se donne :
- une application sensible de référence est construite, exécutant une boucle d'instructions assembleur identifiée, par analyse, comme moins prioritaires dans les mécanismes d'arbitrage du bus mémoire. Un compteur est incrémenté à chaque exécution de la boucle, et
- une application agressive de référence est construite sur le même principe avec une boucle d'instruction parmi les plus prioritaires.

Pour mesurer l'agressivité et la sensibilité d'une séquence de code assembleur, on l'exécute en boucle sur une même période de temps dans les configurations suivantes :
- Exécution de l'application sensible seule : on relève le nombre de boucles exécutées sur la période ;
- Exécution de la séquence seule : on relève le nombre de boucles exécutées sur la période ;
- Exécution de la séquence en parallèle avec l'application sensible : on mesure le ralentissement de l'application sensible lorsqu'elle s'exécute en parallèle de la séquence de code, par rapport à son exécution seule ;
- Exécution de la séquence en parallèle avec l'application agressive : on mesure le ralentissement de la séquence testée lorsqu'elle s'exécute en parallèle de l'application agressive, par rapport à son exécution seule.

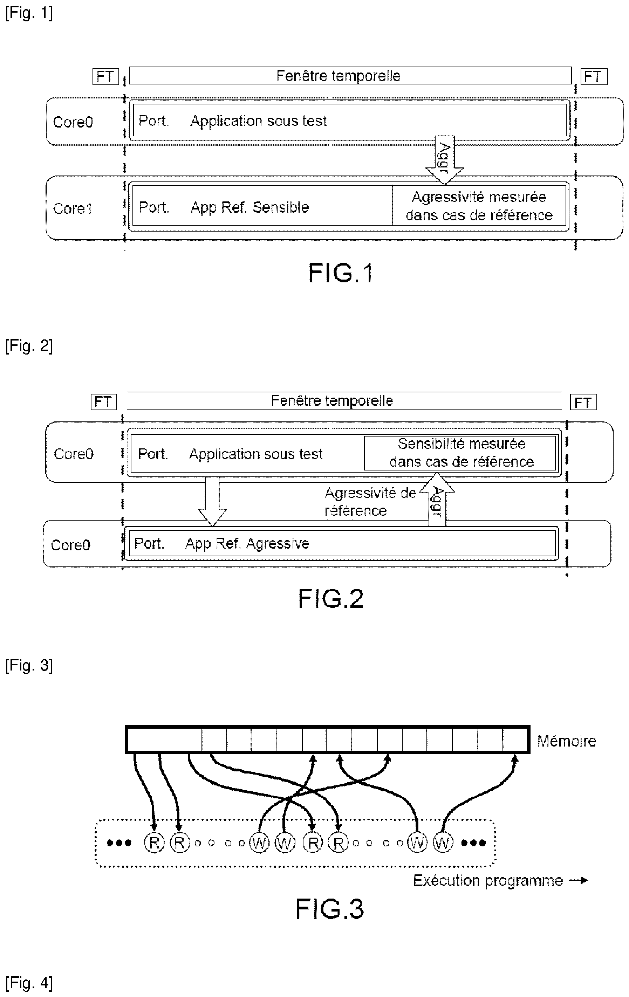

L'agressivité, comme illustrée sur la [Fig.1], est le ratio des nombres de boucles exécutées par l'application sensible de référence sur une même période de temps quand elle est exécutée seule et en parallèle avec la séquence testée.

La sensibilité, comme illustrée sur la [Fig.2], est le ratio des nombres de boucles exécutées par l'application agressive de référence sur une même période de temps quand elle est exécutée seule et en parallèle avec la séquence testée.

Sensibilité et agressivité sont des ratios et sont donc exprimées en pourcentages.

Le phénomène de contentions ou interférences mémoire étant intrinsèquement lié aux sollicitations du bus mémoire par les logiciels, on cherche à caractériser ces sollicitations.

Pour cela, il est connu de définir un profil d'accès mémoire P d'une séquence de code assembleur par une liste séquentielle des instructions assembleur accédant à la mémoire (extrait de cette séquence de code), ainsi que les adresses mémoire qui sont accédées, comme illustré sur la [Fig.3].

Ce profil d'accès mémoire P est complété par des caractéristiques statistiques calculées sur cette liste, notamment, de manière non exhaustive par :
- une Intensité mémoire Iₘ représentative du nombre d'instructions d'accès en lecture R pour Read en langue anglaise ou d'accès en écriture W pour Write en langue anglaise, vs le nombre total d'instructions ;
- un ratio lecture/lecture-écriture ou ration lecture/mémoire Rwr représentatif du nombre d'instructions d'accès en lecture R vs nombre d'instructions d'accès en mémoire (lecture et écriture). Nous appellerons par la suite le nombre d'accès en lecture-écriture par le terme le nombre d'accès mémoire ;
- une entropie E de Shannon du profil d'accès mémoire P représentative de l'aspect aléatoire des adresses accédées en mémoire ; et
- un entrelacement Iv, pour interleaving en langue anglaise, des instructions d'accès en lecture R et des instructions d'accès en écriture W.

Le document "Improving Prediction Accuracy of Memory Interferences for Multicore Platforms", de C.Courtaud et al, 2019, pages 246-259, DOI: 10.1 109/RTSS46320.2019.00031, détaille ces caractéristiques statistiques et démontre leur pertinence pour caractériser la sensibilité d'un logiciel aux contentions.

Un but de l'invention est de pallier les problèmes précédemment cités, et notamment de proposer une solution permettant de générer automatiquement et rapidement des séquences de code assembleur :
- exécutables sans erreur (i.e. : sans arrêt de l'exécution suite à une exception logicielle) ;
- ayant des profils d'accès mémoire P aux caractéristiques choisies et variées, et donc a priori :
- plus ou moins agressif (générant plus ou moins de contentions mémoires) ;
- Plus ou moins sensible (subissant plus ou moins les contentions).

Un autre but de l'invention est d'utiliser ces séquences de code assembleur pour construire :
- une base de plusieurs milliers de bouchons logiciels aux profils d'accès mémoire connus dont on mesure les agressivité et sensibilité. Cette base peut être utilisée pour entrainer (par apprentissage automatique ou Machine Learning en langue anglaise) un modèle capable d'estimer les agressivité et sensibilité de profils d'accès mémoire extraits de véritables applications embarquées critiques ; et
- des bouchons logiciels aux profils d'accès mémoire caractérisés permettant de simuler les agressivité et sensibilité d'applications embarquées concurrentes pour réaliser les tests de performance WCET d'une application embarquée donnée.

Il est proposé, selon un aspect de l'invention, un procédé de génération itérative automatique d'une séquence de Nmax instructions en langage assembleur, exécutable sans erreur par un processeur multi-cœurs, comprenant les étapes de :
- initialisation des registres du processeur, puis choix d'une première instruction de la séquence prédéterminée, éventuellement au hasard ; et
- choix d'une N+1^{ième} instruction, tant que N<Nmax, parmi une instruction de lecture dans une mémoire connectée aux cœurs du processeur par un bus mémoire, une instruction d'écriture dans ladite mémoire, et une instruction locale utilisant uniquement les registres des processeurs, en fonction de règles et de priorités entre lesdites règles, lesdites règles utilisant des écarts respectifs de valeurs de métriques statistiques d'un profil d'accès mémoire d'une séquence de N instructions précédentes comprenant des valeurs de métriques statistiques, avec des valeurs de consignes ;
les règles comprenant une première règle de test si l'intensité mémoire (Im) est supérieure à une consigne (Im_c) d'intensité mémoire, auquel cas le choix de la N+1^{ième} instruction est une instruction locale, et sinon, le choix de la N+1^{ième} instruction est une instruction d'accès en lecture (R) ou une instruction d'accès en écriture (W).

Dans un mode de réalisation, les métriques statistiques du profil d'accès mémoire de la séquence des N instructions précédentes comprennent :
- une intensité mémoire correspondant au ratio du nombre d'instructions d'accès en lecture ou en écriture et du nombre total d'instructions N ;
- un ratio lecture/mémoire correspondant au ratio d'instructions d'accès en lecture et d'instructions d'accès mémoire (lecture et écriture) ; et
- une entropie E de Shannon du profil d'accès mémoire représentative de l'aspect aléatoire des adresses accédées en mémoire.

Selon un mode de réalisation, les métriques statistiques du profil d'accès mémoire de la séquence des N instructions précédentes comprennent, en outre, un entrelacement des instructions d'accès en lecture et des instructions d'accès en écriture.

Selon un mode de réalisation, les règles comprennent des règles appliquées après la première règle, dans un ordre quelconque :
- une deuxième règle de test si le ratio lecture/mémoire est supérieur à une consigne de ratio lecture/ mémoire, auquel cas le choix de la N+1^{ième} instruction est une instruction d'accès en lecture, et sinon le choix de la N+1^{ième} instruction est une instruction d'accès en écriture ;
- une troisième règle de test si l'entropie E de Shannon du profil d'accès mémoire est supérieure à une consigne d'entropie E de Shannon, auquel cas le choix de l'adresse mémoire de la N+1^{ième} instruction est choisie de manière à faire baisser l'entropie E, en prenant une adresse déjà utilisée ou une adresse dont la distance à la précédente est déjà connue, et sinon le choix de l'adresse mémoire de la N+1^{ième} instruction est choisie au hasard ; et
- une quatrième règle de test si l'entrelacement est supérieur à une consigne d'entrelacement, auquel cas le choix de la N+1^{ième} instruction est une instruction d'accès en lecture ou d'accès en écriture de même type que la N^{ième} instruction, et sinon le choix de la N+1^{ième} instruction est une instruction d'accès en lecture ou d'accès en écriture de type opposé à celui de la N^{ième} instruction.

Dans un mode de réalisation, le procédé comprend en outre l'intégration de la séquence de Nmax instructions en langage assembleur dans une boucle d'exécution pour générer un logiciel exécutable ou bouchon logiciel.

L'invention sera mieux comprise à l'étude de quelques modes de réalisation décrits à titre d'exemples nullement limitatifs et illustrés par les dessins annexés sur lesquels :
[Fig.1] illustre schématiquement l'agressivité d'une séquence de code assembleur, selon l'état de l'art ;
[Fig.2] illustre schématiquement la sensibilité d'une séquence de code assembleur, selon l'état de l'art ;
[Fig.3] illustre schématiquement une liste séquentielle des instructions assembleur accédant à la mémoire (extrait de cette séquence de code), ainsi que les adresses mémoire qui sont accédées d'un profil d'accès mémoire, selon l'état de l'art ;
[Fig.4] illustre schématiquement un procédé de génération automatique d'une séquence de Nmax instructions en langage assembleur, exécutable sans erreur par un processeur multi-cœurs, selon un aspect de l'invention ;
[Fig.5] illustre schématiquement un exemple de règles de choix d'instructions du procédé de la [Fig.4], selon un aspect de l'invention ;
[Fig.6] illustre schématiquement une automatisation du processus de sélection des instructions assembleur pour construire rapidement des séquences, selon un aspect de l'invention.

Sur l'ensemble des figures, les éléments ayant des références identiques sont similaires.

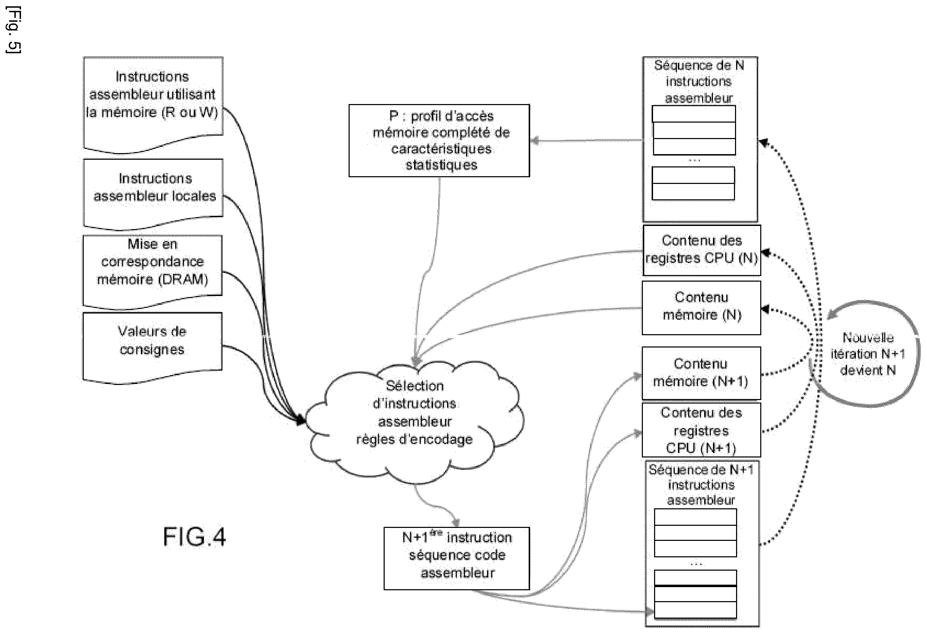

Comme illustré sur la [Fig.4], l'invention propose un procédé de génération automatique d'une séquence de Nmax instructions en langage assembleur, exécutable sans erreur par un processeur multi-cœurs, comprenant les étapes de :
- initialisation des registres du processeur, puis choix d'une première instruction de la séquence prédéterminée, éventuellement au hasard ; et
- choix d'une N+1^{ième} instruction, parmi une instruction de lecture dans une mémoire connectée aux cœurs du processeur par un bus mémoire, une instruction d'écriture dans ladite mémoire, et une instruction locale utilisant uniquement les registres des processeurs, en fonction de règles et de priorités entre lesdites règles, lesdites règles utilisant des écarts respectifs de valeurs de métriques statistiques d'un profil P d'accès mémoire de la séquence des N instructions précédentes comprenant des valeurs de métriques statistiques, avec des valeurs de consignes.

Les métriques statistiques du profil d'accès mémoire de la séquence des N instructions précédentes comprennent :
- une intensité mémoire Im correspondant au ratio du nombre d'instructions d'accès en lecture R ou en écriture W et du nombre total d'instructions N ;
- un ratio lecture/ mémoire Rwr correspondant au ratio d'instructions d'accès en lecture R et d'instructions d'accès mémoire (lecture R et écriture W) ; et
- une entropie E de Shannon du profil d'accès mémoire P représentative de l'aspect aléatoire des adresses accédées en mémoire.

Les métriques statistiques du profil d'accès mémoire de la séquence des N instructions précédentes peuvent comprendre, en outre, un entrelacement Iv des instructions d'accès en lecture R et des instructions d'accès en écriture W.

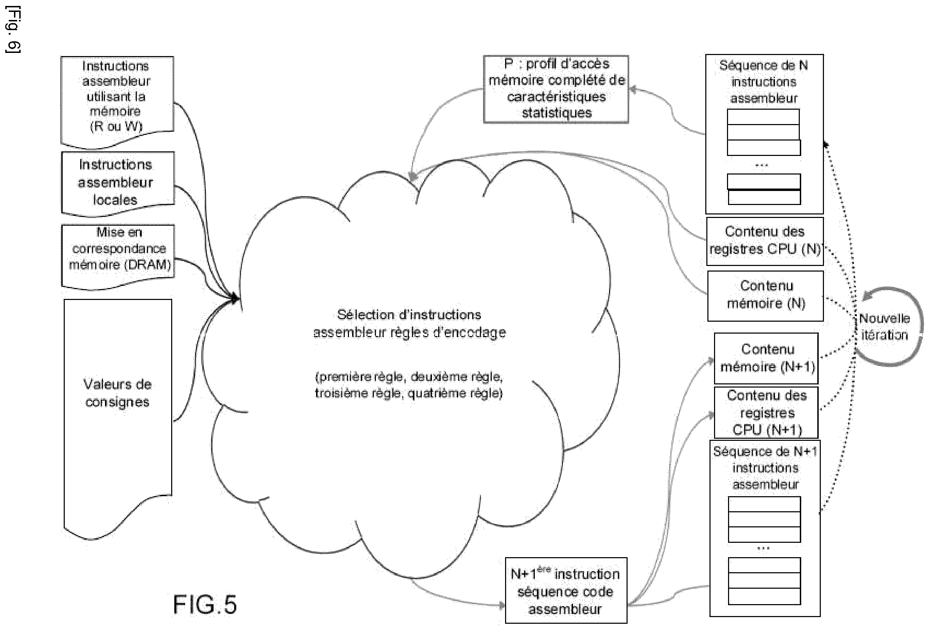

La [Fig.5] représente un exemple de règles de choix d'instructions.

Les règles comprennent une première règle de test si l'intensité mémoire Im est supérieure à une consigne Im_c d'intensité mémoire, auquel cas le choix de la N+1^{ième} instruction est une instruction locale, et sinon, le choix de la N+1^{ième} instruction est une instruction d'accès en lecture R ou une instruction d'accès en écriture W.

Les règles comprennent des règles appliquées après la première règle, dans un ordre quelconque :
- une deuxième règle de test si le ratio lecture/ mémoire Rwr est supérieur à une consigne Rwr_c de ratio lecture/ mémoire, auquel cas le choix de la N+1^{ième} instruction est une instruction d'accès en lecture R, et sinon le choix de la N+1^{ième} instruction est une instruction d'accès en écriture W ;
- une troisième règle de test si l'entropie E de Shannon Ep du profil d'accès mémoire P est supérieure à une consigne Ep_c d'entropie E de Shannon Ep, auquel cas le choix de l'adresse mémoire de la N+1^{ième} instruction est choisie de manière à faire baisser l'entropie E, en prenant une adresse déjà utilisée ou une adresse dont la distance à la précédente est déjà connue, et sinon le choix de l'adresse mémoire de la N+1^{ième} instruction est choisie au hasard ; et
- une quatrième règle de test si l'entrelacement Iv est supérieur à une consigne Iv_c d'entrelacement, auquel cas le choix de la N+1^{ième} instruction est une instruction d'accès en lecture R ou d'accès en écriture W de même type que la N^{ième} instruction, et sinon le choix de la N+1^{ième} instruction est une instruction d'accès en lecture R ou d'accès en écriture W de type opposé à celui de la N^{ième} instruction.

En variante, d'autres métriques peuvent être envisagées, et d'autres règles définies en fonction de celles-ci pour influencer le choix des instructions, des registres utilisés, des adresses mémoire visées.

Le procédé comprend, en outre, l'intégration de la séquence de Nmax instructions en langage assembleur dans une boucle d'exécution pour générer un logiciel exécutable ou bouchon logiciel.

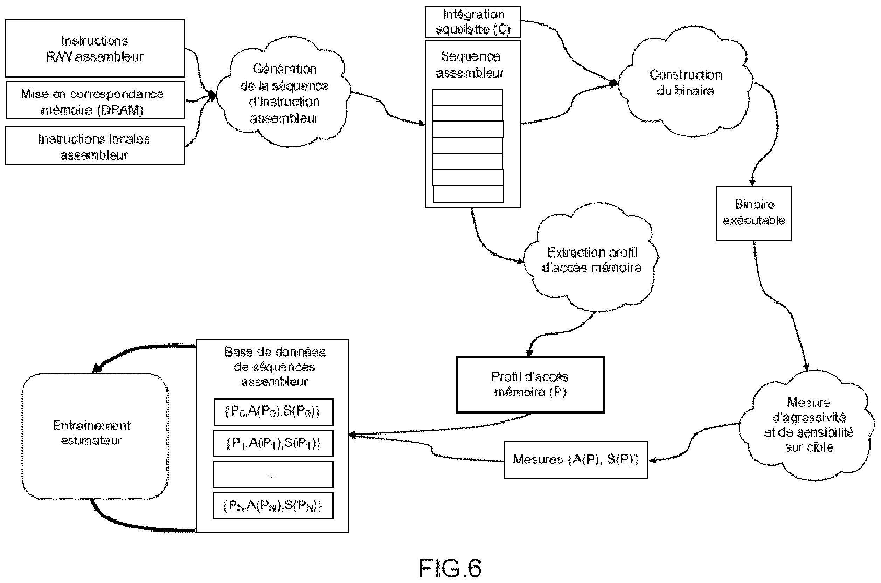

L'invention permet, comme illustré sur la [Fig.6], d'automatiser le processus de sélection des instructions assembleur pour construire rapidement des séquences :
- de taille variable, potentiellement très longues (des milliers d'instructions),
- cohérentes et à l'exécution garantie sur cible (pas d'erreur d'exécution), et
- aux profils d'accès mémoire proches des valeurs cibles ou consignes choisies.

En outre, l'automatisation permet de générer rapidement de multiples séquences, aux profils d'accès mémoires variés (en fonction des multiples valeurs cibles choisies), et donc de construire une base d'apprentissage pertinente pour de l'apprentissage automatique (machine learning), selon les étapes qui suivent :
- génération de la séquence d'instructions assembleur selon les principes précédemment décrits ;
- intégration dans un squelette C et construction du binaire ;
- mesures d'agressivité A et de sensibilité S sur cible ;
- extraction du pattern d'accès mémoire et des métriques associées ; et
- capitalisation des séquences, patterns d'accès mémoire et mesures pour constituer une base d'apprentissage ;
une étape additionnelle peut consister en l'utilisation de la base d'apprentissage pour l'entrainement supervisé d'un estimateur pour la sensibilité et l'agressivité (machine learning).

## Revendications

1. Procédé de génération itérative automatique d'une séquence de Nmax instructions en langage assembleur, exécutable sans erreur par un processeur multi-cœurs, comprenant les étapes de :
- initialisation des registres du processeur, puis choix d'une première instruction de la séquence prédéterminée, éventuellement au hasard ; et
- choix d'une N+1^{ième} instruction, tant que N<Nmax, parmi une instruction de lecture dans une mémoire connectée aux cœurs du processeur par un bus mémoire, une instruction d'écriture dans ladite mémoire, et une instruction locale utilisant uniquement les registres des processeurs, en fonction de règles et de priorités entre lesdites règles, lesdites règles utilisant des écarts respectifs de valeurs de métriques statistiques d'un profil (P) d'accès mémoire d'une séquence de N instructions précédentes comprenant des valeurs de métriques statistiques, avec des valeurs de consignes ;
les règles comprenant une première règle de test si l'intensité mémoire (Im) est supérieure à une consigne (Im_c) d'intensité mémoire, auquel cas le choix de la N+1^{ième} instruction est une instruction locale, et sinon, le choix de la N+1^{ième} instruction est une instruction d'accès en lecture (R) ou une instruction d'accès en écriture (W).

2. Procédé selon la revendication 1, dans lequel les métriques statistiques du profil d'accès mémoire de la séquence des N instructions précédentes comprennent :
- une intensité mémoire (Im) correspondant au ratio du nombre d'instructions d'accès en lecture (R) ou en écriture (W) et du nombre total d'instructions N ;
- un ratio lecture/mémoire (Rwr) correspondant au ratio d'instructions d'accès en lecture (W) et d'instructions d'accès en mémoire (R, W) ; et
- une entropie (E) d'accès de Shannon du profil d'accès mémoire (P) représentative de l'aspect aléatoire des adresses accédées en mémoire.

3. Procédé selon la revendication 2, dans lequel les métriques statistiques du profil d'accès mémoire de la séquence des N instructions précédentes comprennent, en outre, un entrelacement (Iv) des instructions d'accès en lecture (R) et des instructions d'accès en écriture (W).

4. Procédé selon l'une des revendications précédentes, dans lequel, les règles comprennent des règles appliquées après la première règle, dans un ordre quelconque :
- une deuxième règle de test si le ratio lecture/ mémoire (Rwr) est supérieur à une consigne (Rwr_c) de ratio lecture/mémoire, auquel cas le choix de la N+1^{ième} instruction est une instruction d'accès en lecture (R), et sinon le choix de la N+1^{ième} instruction est une instruction d'accès en écriture (W) ;
- une troisième règle de test si l'entropie E de Shannon (Ep) du profil d'accès mémoire (P) est supérieure à une consigne (Ep_c) d'entropie E de Shannon (Ep), auquel cas le choix de l'adresse mémoire de la N+1^{ième} instruction est choisie de manière à faire baisser l'entropie E, en prenant une adresse déjà utilisée ou une adresse dont la distance à la précédente est déjà connue, et sinon le choix de l'adresse mémoire de la N+1^{ième} instruction est choisie au hasard ; et
- une quatrième règle de test si l'entrelacement (Iv) est supérieur à une consigne (Iv_c) d'entrelacement, auquel cas le choix de la N+1^{ième} instruction est une instruction d'accès en lecture (R) ou d'accès en écriture (W) de même type que la N^{ième} instruction, et sinon le choix de la N+1^{ième} instruction est une instruction d'accès en lecture (R) ou d'accès en écriture (W) de type opposé à celui de la N^{ième} instruction.

5. Procédé selon l'une des revendications précédentes comprenant, en outre, l'intégration de la séquence de Nmax instructions en langage assembleur dans une boucle d'exécution pour générer un logiciel exécutable ou bouchon logiciel.

## Patentansprüche

1. Verfahren zur automatischen iterativen Erzeugung einer Sequenz von Nmax-Befehlen in einer zusammengesetzten Sprache, die in einem Mehrkernprozessor fehlerlos ausführbar sind, umfassend die folgenden Schritte:
- Initialisieren von Registern des Prozessors, dann Auswählen eines ersten Befehls der vorbestimmten Sequenz, gegebenenfalls zufällig; und
- wenn N<Nmax ist, Auswählen eines N+1^{ten} Befehls aus einem Befehl zum Lesen in einem Speicher, der über einen Speicherbus mit den Kernen des Prozessors verbunden ist, einem Befehl zum Schreiben in den Speicher, und einem lokalen Befehl, der ausschließlich die Register des Prozessors verwendet, abhängig von Regeln und Prioritäten zwischen diesen Regeln, wobei die Regeln jeweilige Abweichungen von statistischen Metrikwerten eines Speicherzugriffsprofils (P) einer Sequenz von vorhergehenden Befehlen, die statistische Metrikwerte umfassen, mit vorgegebenen Werten verwenden;
wobei die Regeln eine erste Testregel umfassen, wenn die Speicherintensität (Im) größer ist als ein Sollwert (Im_c) der Speicherintensität, wobei in diesem Fall die Auswahl des N+1^{ten} Befehls ein lokaler Befehl ist, und andernfalls die Auswahl des N+1^{ten} Befehls ein Befehl zum Lesezugriff (R) oder ein Befehl zum Schreibzugriff (W) ist.

2. Verfahren nach Anspruch 1, wobei die statistischen Metriken des Zugriffsprofils der Sequenz von N vorhergehenden Befehlen Folgendes umfassen:
- eine Speicherintensität (Im) entsprechend einem Verhältnis der Anzahl von Befehlen zum Lesezugriff (R) bzw. Schreibzugriff (W) zur Gesamtzahl der Befehle N;
- ein Lese-/Speicherverhältnis (Rwr) entsprechend einem Verhältnis von Befehlen zum Lesezugriff (R) und Speicherzugriffsbefehlen (R, W); und
- eine Shannon-Zugriffsentropie (E) des Speicherzugriffsprofils (P), die den Zufallsaspekt der Adressen, auf die im Speicher zugegriffen wird, repräsentiert.

3. Verfahren nach Anspruch 2, wobei die statistischen Metriken des Zugriffsprofils der Sequenz von N vorhergehenden Befehlen ferner eine Verschachtelung (Iv) der Befehle zum Lesezugriff (R) bzw. Schreibzugriff (W) umfassen.

4. Verfahren nach einem der vorhergehenden Ansprüche, wobei die Regeln folgende Regeln umfassen, die in beliebiger Reihenfolge nach der ersten Regel angewendet werden:
- eine zweite Testregel, wenn das Verhältnis zwischen Lese- und Speicherzugriff (Rwr) größer ist als ein Sollwert (Rwr_c) des Verhältnisses zwischen Lesen und Speichern, wobei in diesem Fall die Auswahl des N+1^{ten} Befehls ein Befehl zum Lesezugriff (R) ist, und andernfalls die Auswahl des N+1^{ten} Befehls ein Befehl zum Schreibzugriff (W) ist;
- eine dritte Testregel, wenn die Shannon-Entropie E (Ep) des Speicherzugriffsprofils (P) größer ist als ein Sollwert (Ep_c) der Shannon-Entropie E (Ep), wobei in diesem Fall die Auswahl der Speicheradresse des N+1^{ten} Befehls so ausgewählt wird, dass die Entropie E gesenkt wird, indem eine bereits verwendete Adresse genommen wird oder eine Adresse, deren Abstand zur vorherigen bereits bekannt ist, und andernfalls die Speicheradresse des N+1^{ten} Befehls zufällig ausgewählt wird; und
- eine vierte Testregel, wenn die Verschachtelung (Iv) größer ist als ein Sollwert (Iv_c) der Verschachtelung, wobei in diesem Fall die Auswahl des N+1^{ten} Befehls ein Befehl zum Lesezugriff (R) oder zum Schreibzugriff (W) desselben Typs wie der N^{te} Befehl ist, und andernfalls die Auswahl des N+1^{ten} Befehls ein Befehl zum Lesezugriff (R) oder zum Schreibzugriff (W) vom entgegengesetzten Typ wie der N^{te} Befehl ist.

5. Verfahren nach einem der vorhergehenden Ansprüche, ferner umfassend die Integration einer Sequenz von Nmax-Befehlen in einer zusammengesetzten Sprache in einer Ausführungsschleife zum Erzeugen einer ausführbaren Software oder eines Software-Plugins.

## Claims

1. Method for automatically iteratively generating a sequence of Nmax assembler language instructions, executable errorless by a multi-core processor, comprising the steps of:
- initialising the registers of the processor, then choosing a first instruction from the predetermined sequence, optionally at random; and
- choosing an N+1^{th} instruction, while N<Nmax, from among a reading instruction in a memory connected to the cores of the processor by a memory bus, a writing instruction in said memory, and a local instruction using only the registers of the processors, as a function of rules and of priorities between said rules, said rules using respective differences of statistical metric values of an memory access profile (P) of a sequence of N preceding instructions comprising statistical metric values, with setpoint values;
the rules comprising a first test rule, if the memory intensity (Im) is greater than a memory intensity setpoint (Im_c), in which case, choosing the N+1^{th} instruction is a local instruction, and otherwise, choosing the N+1^{th} instruction is a reading access instruction (R) or a writing access instruction (W).

2. Method according to claim 1, wherein the statistical metrics of the memory access profile of the sequence of N preceding instructions comprise:
- a memory intensity (Im) corresponding to the ratio of the number of reading (R) or writing (W) access instructions and of the total number of instructions N;
- a reading/memory ratio (Rwr) corresponding to the ratio of reading access instructions (W) and of memory access instructions (R, W); and
- a Shannon access entropy of the memory access profile (P) representative of the random aspect of memory-accessed addresses.

3. Method according to claim 2, wherein the statistical metrics of the memory access profile of the sequence of N preceding instructions further comprise an interlacing (Iv) of the reading access instructions (R) and of the writing access instructions (W).

4. Method according to any one of the preceding claims, wherein, the rules comprise rules applied after the first rule, in any order:
- a second test rule, if the reading/memory ratio (Rwr) is greater than a reading/memory ratio setpoint (Rwr_c), in which case, choosing the N+1^{th} instruction is a reading access instruction (R), and otherwise, choosing the N+1^{th} instruction is a writing access instruction (W);
- a third test rule, if the Shannon (Ep) entropy E of the memory access profile (P) is greater than a Shannon (Ep) entropy E setpoint (Ep_c), in which case, choosing the memory address of the N+1^{th} instruction is chosen, so as to make the entropy E lower, and taking an address already used or an address, the distance to the preceding one of which is already known, and otherwise, choosing the memory address of the N+1^{th} instruction is chosen at random; and
- a fourth test rule, if the interlacing (Iv) is greater than an interlacing setpoint (Iv_c), in which case, choosing the N+1^{th} instruction is a reading access (R) or writing access (W) instruction of the same type as the N^{th} instruction, and otherwise, choosing the N+1^{th} instruction is a reading access (R) or writing access (W) instruction of the type opposite to that of the N^{th} instruction.

5. Method according to any one of the preceding claimsl, further comprising the integration of the sequence of Nmax assembler language instructions in an execution loop to generate executable software or software plugin.
